# EUROPEAN PATENT APPLICATION

(11) **EP 4 693 435 A1**
(43) Date of publication of application: **11.02.2026**
(21) Application number: 24815279.5
(22) Date of filing: 21.05.2024
(51) Int. Cl.: H01M 4/13, H01G 11/26, H01G 11/46, H01M 4/136, H01M 4/58, H01M 4/62, H01M 4/66, H01M 4/70

(54) **POSITIVE ELECTRODE FOR POWER STORAGE ELEMENTS, POWER STORAGE ELEMENT, AND POWER STORAGE DEVICE**

(30) Priority: 29.05.2023 JP 2023087898
(71) Applicant: GS Yuasa International Ltd., Kisshoin, Minami-ku, Kyoto-shi, Kyoto 601-8520 (JP)
(72) Inventor: HOSHINO Satoshi, Kyoto-shi, Kyoto 601-8520 (JP); WAKAMATSU Hideaki, Kyoto-shi, Kyoto 601-8520 (JP); INOUE Naoki, Kyoto-shi, Kyoto 601-8520 (JP); SHIBATA Masafumi, Kyoto-shi, Kyoto 601-8520 (JP); TAKAHASHI Yu, Kyoto-shi, Kyoto 601-8520 (JP)
(74) Representative: Isarpatent
(86) International application number: PCT/JP2024/018571
(87) International publication number: WO 2024/247795

(57) **Abstract**

A positive electrode for an energy storage device according to an aspect of the present invention includes: a positive electrode substrate containing metallic aluminum and having a surface on which the metallic aluminum is exposed; and a positive electrode active material layer directly laminated on the surface on which the metallic aluminum is exposed and containing positive electrode active material particles, wherein the positive electrode active material particles have a fracture strength of not less than 30 MPa, the positive electrode active material particles have an average particle size of not less than 3 µm, the positive electrode active material layer contains a non-aqueous binder, and a ratio of an area of recesses in a region where the positive electrode active material layer is laminated on the surface on which the metallic aluminum is exposed is not less than 5%.

## Description

### TECHNICAL FIELD

The present invention relates to a positive electrode for an energy storage device, an energy storage device, and an energy storage apparatus.

### BACKGROUND ART

Non-aqueous electrolyte secondary batteries, which are typified by lithium-ion non-aqueous electrolyte secondary batteries, are frequently used in electronic devices such as personal computers and communication terminals, automobiles, and the like, because of their high energy density. A non-aqueous electrolyte secondary battery generally includes an electrode body having a pair of electrodes electrically isolated by a separator, and a non-aqueous electrolyte interposed between the electrodes, and is configured to be charged and discharged by delivering charge-transporting ions between the two electrodes. In addition, capacitors such as a lithium-ion capacitor and an electric double-layer capacitor are also widely adopted as energy storage devices other than the non-aqueous electrolyte secondary battery.

In general, a positive electrode of the energy storage device has a layer containing a positive electrode active material capable of inserting and extracting charge-transporting ions. Patent Literature 1 describes an invention of a positive electrode for a non-aqueous electrolyte secondary battery having a structure in which a conductive base layer is provided between a positive electrode current collector sheet and a positive electrode active material layer.

### CITATION LIST

### Patent Literature

Patent Literature 1: WO 2017/195332

### DISCLOSURE OF INVENTION

### PROBLEMS TO BE SOLVED BY THE INVENTION

As in the positive electrode described in Patent Literature 1, when a conductive layer is provided between a positive electrode current collector sheet (also referred to as a positive electrode substrate or the like) and a positive electrode active material layer, there is an advantage that electrical resistance can be reduced. However, the positive electrode provided with such a conductive layer has a disadvantage of high cost.

An object of the present invention is to provide a positive electrode for an energy storage device, which is a positive electrode having a structure in which a positive electrode active material layer is directly laminated on a positive electrode substrate, and which has reduced electrical resistance, and to provide an energy storage device and an energy storage apparatus using such a positive electrode for an energy storage device.

### MEANS FOR SOLVING THE PROBLEMS

A positive electrode for an energy storage device according to an aspect of the present invention includes: a positive electrode substrate containing metallic aluminum and having a surface on which the metallic aluminum is exposed; and a positive electrode active material layer directly laminated on the surface on which the metallic aluminum is exposed and containing positive electrode active material particles, wherein the positive electrode active material particles have a fracture strength of not less than 30 MPa, the positive electrode active material particles have an average particle size of not less than 3 µm, the positive electrode active material layer contains a non-aqueous binder, and a ratio of an area of recesses in a region where the positive electrode active material layer is laminated on the surface on which the metallic aluminum is exposed is not less than 5%.

An energy storage device according to an other aspect of the present invention includes the electrode for an energy storage device.

An energy storage apparatus according to a still other aspect of the present invention includes two or more energy storage devices, and one or more of the energy storage devices.

### EFFECT OF THE INVENTION

According to any one aspect of the present invention, it is possible to provide a positive electrode for an energy storage device, which is a positive electrode having a structure in which a positive electrode active material layer is directly laminated on a positive electrode substrate, and which has reduced electrical resistance, and an energy storage device and an energy storage apparatus using such a positive electrode for an energy storage device.

### BRIEF DESCRIPTION OF DRAWINGS

[FIG. 1] FIG. 1 is a schematic cross-sectional view illustrating an embodiment of a positive electrode for an energy storage device.
[FIG. 2] FIG. 2 is an oblique perspective view illustrating an embodiment of the energy storage device.
[FIG. 3] FIG. 3 is a schematic view illustrating an embodiment of an energy storage apparatus composed of a plurality of energy storage devices assembled together.

### DESCRIPTION OF EMBODIMENTS

First, outlines of an electrode for an energy storage device, an energy storage device, and an energy storage apparatus disclosed in this specification will be described.
[1] A positive electrode for an energy storage device according to an aspect of the present invention includes: a positive electrode substrate containing metallic aluminum and having a surface on which the metallic aluminum is exposed; and a positive electrode active material layer directly laminated on the surface on which the metallic aluminum is exposed and containing positive electrode active material particles, wherein the positive electrode active material particles have a fracture strength of not less than 30 MPa, the positive electrode active material particles have an average particle size of not less than 3 µm, the positive electrode active material layer contains a non-aqueous binder, and a ratio of an area of recesses in a region where the positive electrode active material layer is laminated on the surface on which the metallic aluminum is exposed is not less than 5%.

The positive electrode for an energy storage device (hereinafter also simply referred to as "positive electrode") described in the above [1] is a positive electrode having a structure in which a positive electrode active material layer is directly laminated on a positive electrode substrate, and has reduced electrical resistance. The reason for this is not clear, but the following reason is presumed. The positive electrode active material particles used in the positive electrode described in the above [1] have a fracture strength of not less than 30 MPa and are hard, and have an average particle size of not less than 3 µm and a sufficient size. In a process of manufacturing the positive electrode, a positive electrode active material layer containing such positive electrode active material particles is laminated on a positive electrode substrate and pressed, whereby at least a part of the positive electrode active material particles is embedded into the positive electrode substrate. Here, the "ratio of the area of recesses in the region where the positive electrode active material layer is laminated on the surface on which the metallic aluminum is exposed" in the positive electrode described in the above [1] represents a degree to which the positive electrode active material particles are embedded in the positive electrode substrate. That is, the area ratio of the recesses being not less than 5% indicates that the number of positive electrode active material particles sufficiently embedded in the positive electrode substrate is large. In the positive electrode described in the above [1], since the number of positive electrode active material particles sufficiently embedded in the positive electrode substrate is large as described above, a contact area between the positive electrode active material particles and the positive electrode substrate is increased, and the electrical resistance is presumed to be reduced. When the fracture strength of the positive electrode active material particles is less than 30 MPa, and when the average particle size of the positive electrode active material particles is less than 3 µm, the positive electrode active material particles are not sufficiently embedded into the positive electrode substrate even when pressing is performed in the process of manufacturing the positive electrode, and thus an effect of reducing the electrical resistance is not achieved. In addition, since the non-aqueous binder is softer than an aqueous binder and the positive electrode active material particles are not excessively embedded in the positive electrode substrate, it is possible to maintain the strength of the positive electrode substrate.

In a case where the positive electrode is incorporated in an energy storage device, the fracture strength and the average particle size of the positive electrode active material particles are measured in a completely discharged state by the following method. First, a constant-current charge is performed on the energy storage device at a charging current of 0.1 C until a charge cut-off voltage is reached during normal use, and the device is brought into a fully charged state. After a rest period of 10 minutes, a constant-current discharge is performed at a discharge current of 0.1 C until a discharge cut-off voltage (lower limit voltage) is reached during normal use. The energy storage device is disassembled, the positive electrode is removed, a test cell with a metallic lithium electrode as a counter electrode is assembled, constant-current discharge is performed at a current value of 10 mA per 1 g of the positive electrode active material layer until a positive electrode potential reaches 2.0 V vs. Li/Li⁺, and the positive electrode is adjusted to a completely discharged state. The test cell is re-disassembled and the positive electrode is removed. The electrolyte and the like adhering to the removed positive electrode are sufficiently washed by using dimethyl carbonate, and the positive electrode active material particles are collected after drying at room temperature for a whole day and night. The collected positive electrode active material particles are subjected to measurement. Operations from the disassembly of the energy storage device to the collection of the positive electrode active material particles are performed in an argon atmosphere with a dew point of not greater than -60 °C. The "during normal use" refers to a case where the energy storage device is used by adopting charging conditions and discharging conditions recommended or designated for the energy storage device. With respect to the charging conditions, for example, when a charger for the energy storage device is prepared, the energy storage device may be used by applying the charger.

The "fracture strength" of the positive electrode active material particles is measured by a micro-compression test using a micro-compression tester ("MCT-511" manufactured by Shimadzu Corporation). To be specific, in a compression test mode, a fracture test force is measured under conditions of indenter type: FLAT50, load rate: 0.1340 mN/sec, and test force: 1.0 mN to 30.0 mN, and the fracture strength of the positive electrode active material is determined in accordance with JIS-R-1639-5 (2007). In addition, the fracture strength is measured for five positive electrode active material particles, and an average value thereof is adopted.

The "average particle size" of the positive electrode active material particles means a value at which a volume-based cumulative distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013). The same applies to the average particle size of other particles.

The "recess" in the positive electrode substrate refers to a recess having a diameter of not less than 1 µm. The "ratio of the area of the recesses in the region where the positive electrode active material layer is laminated on the surface on which the metallic aluminum is exposed" is determined by immersing the positive electrode in a solvent capable of dissolving the non-aqueous binder contained in the positive electrode, performing ultrasonic cleaning treatment at a temperature of 80 °C to peel off the positive electrode active material layer from the positive electrode, and observing the obtained positive electrode substrate with a scanning electron microscope (SEM). To be specific, JSM-7001F (manufactured by JEOL Ltd.) is used as the SEM. As an SEM image, a secondary electron image is observed. An acceleration voltage is 15 kV. An observation magnification is set to 20000 times. In addition, various conditions such as a spot diameter, a working distance, an irradiation current, brightness, and a focus are appropriately set so that the contours of the recesses become clear. The surface of the positive electrode substrate in the region where the positive electrode active material layer was laminated on the surface on which the metallic aluminum was exposed is observed by the SEM, and the obtained SEM image is stored as an image file. By using image analysis software, the areas of individual recesses having diameters of not less than 1 µm in an observation area range of 2.88 mm² are integrated, and a ratio of the total of the areas of the recesses to the area (2.88 mm²) of the region where the positive electrode active material layer is laminated on the surface on which metallic aluminum was exposed is calculated. When the recess has a shape other than a perfect circle, the longest diameter is defined as the diameter. A "ratio of an area of recesses in a region where the positive electrode active material layer is not laminated (on the surface on which the metallic aluminum is exposed)", which will be described below, is also measured and calculated in the same manner.

[2] In the positive electrode described in the above [1], the region where the positive electrode active material layer is not laminated may exist on the surface on which the metallic aluminum is exposed, and the ratio of the area of the recesses in the region where the positive electrode active material layer is not laminated may be not greater than 0.5%.

In order to reduce the electrical resistance of the positive electrode, it is conceivable to use a positive electrode substrate subjected to a roughening treatment. In the positive electrode using the positive electrode substrate subjected to the roughening treatment, the contact area between the positive electrode substrate and the positive electrode active material particles is increased, and thus the electrical resistance is reduced. However, the positive electrode substrate subjected to the roughening treatment is expensive. Further, it is also conceivable that the positive electrode substrate subjected to the roughening treatment may have reduced strength of the positive electrode substrate due to the embedding of the positive electrode active material particles, which may cause problems in manufacturing. Here, in the case of the positive electrode substrate subjected to the roughening treatment, generally, the entire surface is uniformly subjected to the roughening treatment. That is, when the ratio of the area of the recesses in the region where the positive electrode active material layer is not laminated exceeds 0.5%, it is usually presumed that the positive electrode substrate subjected to the roughening treatment is used. On the other hand, in the positive electrode described in the above [2], since the ratio of the area of the recesses in the region where the positive electrode active material layer is not laminated is not greater than 0.5%, i.e., the positive electrode substrate that is not subjected to the roughening treatment is used, it is possible to achieve a reduction in cost, an improvement in strength, and the like.

[3] In the positive electrode described in the above [1] or [2], the positive electrode active material particles may contain a lithium transition metal compound having a polyanion structure.

The lithium transition metal compound having a polyanion structure usually has lower electron conductivity than other positive electrode active materials. Therefore, in the case of the positive electrode described in the above [3], in which the positive electrode active material particles contain a lithium transition metal compound having a polyanion structure, there is a great advantage due to the reduction in electrical resistance.

[4] In the positive electrode described in any one of the above [1] to [3], a density of the positive electrode active material layer may be not less than 1.5 g/cm³.

In the positive electrode described in the above [4], the electrical resistance is further reduced.

The "density" of the positive electrode active material layer is a value calculated from a mass per unit area of the positive electrode active material layer and an average thickness of one layer of the positive electrode active material layer. That is, the "density" of the positive electrode active material layer is an apparent density. In a case where the positive electrode active material layers are each provided on both surfaces of the positive electrode substrate, the average thickness is that of one positive electrode active material layer provided on one surface of the positive electrode substrate. The average thickness of the positive electrode active material layer is an average value of thicknesses measured at any five points.

[5] In the positive electrode described in any one of the above [1] to [4], the positive electrode active material layer may further include a conductive agent, and a content of the conductive agent in the positive electrode active material layer may be not less than 0.5% by mass.

In the positive electrode described in the above [5], the electrical resistance is further reduced.

[6] An energy storage device according to an other aspect of the present invention includes the positive electrode described in any one of the above [1] to [5].

Since the energy storage device described in the above [6] includes the positive electrode described in any one of the above [1] to [5], the electrical resistance is reduced.

[7] An energy storage apparatus according to a still other aspect of the present invention includes two or more energy storage devices, and one or more of the energy storage devices described in the above [6].

Since the energy storage apparatus described in the above [7] includes one or more of the energy storage devices described in the above [6], the electrical resistance is reduced.

A positive electrode, a method for manufacturing a positive electrode, an energy storage device, an energy storage apparatus, a method for manufacturing an energy storage device according to an embodiment of the present invention, and other embodiments will be described in detail. The names of the constituent members (components) used in the embodiments may be different from the names of the constituent members (components) used in the background art.

### <Positive Electrode>

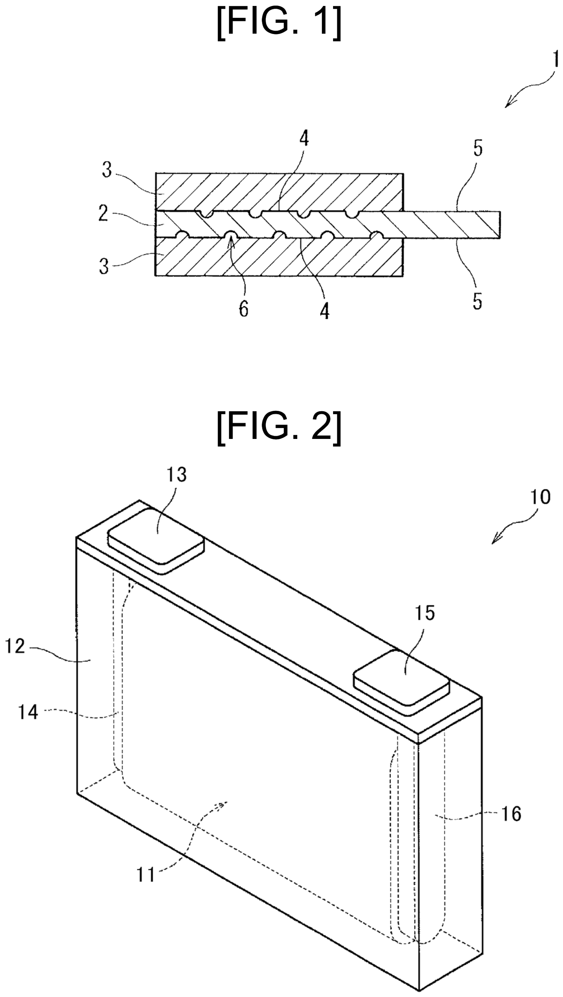

A positive electrode 1 of FIG. 1 according to an embodiment of the present invention includes a positive electrode substrate 2 and a positive electrode active material layer 3 directly laminated on the positive electrode substrate 2. The positive electrode 1 is a positive electrode for an energy storage device, and is preferably a positive electrode for a non-aqueous electrolyte energy storage device.

The positive electrode substrate 2 has conductivity. The presence or absence of "conductivity" is determined using a volume resistivity of 10⁻² Ω·cm measured in accordance with JIS-H-0505 (1975) as a threshold value.

The positive electrode substrate 2 contains metallic aluminum. The metallic aluminum is a substance containing an aluminum element and having a metallic property. The metallic aluminum may be pure aluminum or an aluminum alloy. The positive electrode substrate 2 may be substantially made of pure aluminum or an aluminum alloy, or may be made of pure aluminum or an aluminum alloy. The content of the aluminum element in the positive electrode substrate 2 may be not less than 80% by mass and not greater than 100% by mass, or may be not less than 95% by mass and not greater than 100% by mass. Examples of pure aluminum or aluminum alloys include A1085, A3003, A1N30, and the like specified in JIS-H-4000 (2014) or JIS-H-4160 (2006).

The positive electrode substrate 2 illustrated in FIG. 1 has a plate-like shape. The positive electrode substrate 2 may be, for example, a substrate made of a member other than metallic aluminum, on which a layer of metallic aluminum is provided by vapor deposition or the like, but is preferably a metallic aluminum foil. That is, the positive electrode substrate 2 is preferably a pure aluminum foil or an aluminum alloy foil. Hereinafter, the pure aluminum foil and the aluminum alloy foil are also collectively referred to as an aluminum foil.

The positive electrode substrate 2 has a surface on which metallic aluminum is exposed. In an embodiment of the present invention, metallic aluminum may be exposed on the entire surface of the positive electrode substrate 2. When the positive electrode substrate 2 is an aluminum foil, metallic aluminum is usually exposed on the entire surface of the positive electrode substrate 2. The positive electrode substrate 2 containing metallic aluminum, on the surface of which a coating such as a coating made of aluminum oxide or a coating containing aluminum fluoride is formed, is also included in those having a surface on which metallic aluminum is exposed.

An average thickness of the positive electrode substrate 2 is preferably not less than 3 µm and not greater than 50 µm, more preferably not less than 5 µm and not greater than 40 µm, still more preferably not less than 8 µm and not greater than 30 µm, and particularly preferably not less than 10 µm and not greater than 25 µm. By setting the average thickness of the positive electrode substrate 2 within the above range, energy density per unit volume of the energy storage device can be increased while increasing the strength of the positive electrode substrate 2.

The positive electrode active material layer 3 is directly laminated on the surface of the positive electrode substrate 2 on which the metallic aluminum is exposed. In the positive electrode 1 of FIG. 1, the positive electrode active material layers 3 are each laminated on both surfaces of the positive electrode substrate 2 (the upper surface and the lower surface of the positive electrode substrate 2 in FIG. 1). However, the positive electrode active material layer 3 is not laminated on the entire surface of both surfaces of the positive electrode substrate 2. That is, a region 4 where the positive electrode active material layer 3 is laminated and a region 5 where the positive electrode active material layer 3 is not laminated exist on the surfaces of the positive electrode substrate 2 on which the metallic aluminum is exposed (the upper surface and the lower surface of the positive electrode substrate 2 in FIG. 1). The terms "upper surface" and "lower surface" merely represent two main surfaces of the plate-like positive electrode substrate 2, respectively, and do not limit the orientation or the like of the positive electrode 1 in use. The region 5 where the positive electrode active material layer 3 is not laminated serves as a portion to be connected to a positive electrode lead 14 in an energy storage device 10 of FIG. 2, which will be described below.

A recess 6 is formed in the region 4 where the positive electrode active material layer 3 is laminated on the surface of the positive electrode substrate 2 on which the metallic aluminum is exposed. The recess 6 is formed by embedding, in the positive electrode substrate 2, positive electrode active material particles (not illustrated), which will be described below, contained in the positive electrode active material layer 3. A lower limit of the ratio of the area of the recesses 6 in the region 4 where the positive electrode active material layer 3 is laminated is 5%, preferably 8%, more preferably 10%, and still more preferably 12%, 15%, or 20% in some cases. The ratio of the area of the recesses 6 in the region 4 where the positive electrode active material layer 3 is laminated is not less than the above lower limit, whereby a contact area between the positive electrode active material particles and the positive electrode substrate 2 is increased, and the electrical resistance is reduced. An upper limit of the ratio of the area of the recesses 6 in the region 4 where the positive electrode active material layer 3 is laminated may be, for example, 60%, 50%, or 40%. The ratio of the area of the recesses 6 in the region 4 where the positive electrode active material layer 3 is laminated can be set to any one of the above-described lower limits or more and any one of the above-described upper limits or less.

An upper limit of a ratio of an area of recesses 6 in the region 5 where the positive electrode active material layer 3 is not laminated on the surface of the positive electrode substrate 2 on which the metallic aluminum is exposed is preferably 0.5%, and more preferably 0.1%. A lower limit of the ratio of the area of the recesses 6 in the region 5 where the positive electrode active material layer 3 is not laminated may be 0% or 0.01%. As described above, it is preferable that the recesses 6 are not substantially formed in the region 5 where the positive electrode active material layer 3 is not laminated. In the positive electrode 1 according to an embodiment of the present invention, the positive electrode substrate 2 in which the recesses 6 are not substantially formed in the region 5 where the positive electrode active material layer 3 is not laminated, typically, the positive electrode substrate 2 which is not subjected to the roughening treatment can be used, and even when such a positive electrode substrate 2 is used, the electrical resistance is reduced. The ratio of the area of the recesses 6 in the region 5 where the positive electrode active material layer 3 is not laminated can be set to any one of the above-described lower limits or more and any one of the above-described upper limits or less.

The positive electrode active material layer 3 includes positive electrode active material particles and a non-aqueous binder. The positive electrode active material layer 3 contains optional components such as a conductive agent, a thickener, and a filler, if necessary.

The positive electrode active material particles are particles of a positive electrode active material. The positive electrode active material can be appropriately selected from any known positive electrode active materials. As the positive electrode active material for a lithium-ion secondary battery, a material capable of inserting and extracting lithium ions is usually used. Examples of the positive electrode active material include lithium transition metal composite oxides having an α-NaFeO₂ crystal structure, lithium transition metal composite oxides having a spinel-type crystal structure, lithium transition metal compounds having a polyanion structure (hereinafter, also referred to as "polyanion compounds"), chalcogen compounds, sulfurs, and the like. Examples of the lithium transition metal composite oxides having an α-NaFeO₂ crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1 - x - γ), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1 - x - γ), Li[LiₓNi_{γ}Mn_{β}Co_{(1-x-γ-β)}]O₂ (0 ≤ x < 0.5, 0 < γ, 0 < β, 0.5 < y + β < 1, 0 < 1 - x - γ - β), Li[LiₓNi_{γ}Co_{β}Al_{(1-x-γ-β)}]O₂ (0 ≤ x < 0.5, 0 < γ, 0 < β, 0.5 < γ + β < 1, 0 < 1 - x - γ - β), and the like. Examples of the lithium transition metal composite oxides having a spinel crystal structure include LiₓMn₂O₄, LiₓNi_{γ}Mn_{(2-γ)}O₄, and the like. Examples of the chalcogen compounds include titanium disulfide, molybdenum disulfide, molybdenum dioxide, and the like. The polyanion compounds will be described in detail below. Atoms or polyanions in these materials may be partially substituted with atoms or anionic species of other elements. Surfaces of these materials may be coated with other materials. In the positive electrode active material layer 3, one of these materials may be used alone, or two or more kinds may be used as a mixture.

Among the positive electrode active materials, polyanion compounds are preferable. That is, the positive electrode active material particles preferably contain polyanion compounds. Examples of the polyanion compounds include compounds containing an oxo acid anion (PO₄³⁻, SO₄²⁻, SiO₄⁴⁻, BO₃³⁻, VO₄³⁻, etc.), a lithium ion, a transition metal ion, and the like. The oxo acid anion may be a condensed anion (P₂O₇⁴⁻, P₃O₁₀⁵⁻, etc.). The polyanion compound may have an olivine-type crystal structure. The polyanion compound is typically a polyanion compound containing a lithium element and a transition metal element, and may further contain other elements (for example, a halogen element, etc.). The transition metal element contained in the polyanion compound is preferably an iron element, a manganese element, a nickel element, or a cobalt element, and more preferably an iron element. The oxo acid anion contained in the polyanion compound is preferably a phosphate anion (PO₄³⁻).

The polyanion compound is preferably a compound represented by the following formula (1).

LiₐM_{b}(AO_{c})_{d}Xₑ ... (1)

In the formula (1), M is at least one transition metal element. A is at least one selected from B, Al, Si, P, S, Cl, Ti, V, Cr, Mo, and W. X is at least one halogen element. a, b, c, d, and e are numbers satisfying 0 < a ≤ 3, 0 < b ≤ 2, 2 ≤ c ≤ 4, 1 ≤ d ≤ 3, and 0 ≤ e ≤ 1. Each of a, b, c, d, and e may be an integer or a decimal.

M in the formula (1) is preferably any one of Fe, Mn, Ni, and Co, or a combination of any two or more thereof. M is further preferably Fe, Mn or a combination thereof, and more preferably Fe. Further, the content of Fe in M is preferably not less than 50 mol%, and more preferably not less than 70 mol%, not less than 90 mol%, or not less than 99 mol%. A is preferably P. X is preferably F. In an embodiment, a = 1, b = 1, c = 4, d = 1, and e = 0 may be preferable.

Specific examples of the polyanion compounds include LiFePO₄, LiCoPO₄, LiFe_{0.5}Co_{0.5}PO₄, LiMnPO₄, LiNiPO₄, LiMn_{0.5}Fe_{0.5}PO₄, LiCrPO₄, LiFeVO₄, Li₂FeSiO₄, Li₂Fe₂(SO₄)₃, LiFeBO₃, LiFePO_{3.9}F_{0.2}, Li₃V₂(PO₄)₃, Li₂MnSiO₄, Li₂CoPO₄F, and the like. Atoms or polyanions in these polyanion compounds may be partially substituted with other atoms or anionic species. One of the polyanion compounds may be used alone, or two or more kinds may be used as a mixture.

A lower limit of the content of the polyanion compounds in the positive electrode active material particles may be 60% by mass, or may be 80% by mass, 90% by mass, 95% by mass, or 99% by mass. An upper limit of the content of the polyanion compounds in the positive electrode active material particles may be 100% by mass or 99.9% by mass.

At least a part of the surface of the positive electrode active material particles containing the polyanion compound may be coated with a carbon material. When at least a part of the surface of the positive electrode active material particles is coated with a carbon material, electron conductivity between the positive electrode active material particles and between the positive electrode active material particles and the positive electrode substrate 2 can be increased. The carbon material is, for example, a material having a carbon element content of not less than 80% by mass and not greater than 100% by mass. The carbon element content in the carbon material may be not less than 90% by mass, and may be 95% by mass. Examples of elements other than the carbon element that may be contained in the carbon material include an oxygen element, a hydrogen element, a nitrogen element, and the like. Examples of the carbon material include graphite, non-graphitic carbon, and the like. The content of the carbon material in the positive electrode active material particles may be, for example, not less than 0.1% by mass and not greater than 20% by mass, may be not less than 0.2% by mass and not greater than 10% by mass, and may be not less than 0.3% by mass and not greater than 5% by mass.

The positive electrode active material particles may be particles (single particles) in which a plurality of primary particles are individually present without being aggregated, but are preferably secondary particles formed by aggregation of a plurality of primary particles. As the positive electrode active material particles, secondary particles of a polyanion compound are suitably used.

A lower limit of the fracture strength of the positive electrode active material particles is 30 MPa, preferably 40 MPa, and more preferably 50 MPa. By having the fracture strength of the positive electrode active material particles not less than the above lower limit, the positive electrode active material particles are sufficiently embedded in the positive electrode substrate 2 by pressing or the like in the process of manufacturing the positive electrode, and thus the electrical resistance can be reduced. When the fracture strength of the positive electrode active material particles is less than the above lower limit, cracking or deformation of the positive electrode active material particles is likely to occur during pressing or the like, the positive electrode active material particles are not sufficiently embedded in the positive electrode substrate 2, and the electrical resistance is not sufficiently reduced. An upper limit of the fracture strength of the positive electrode active material particles may be, for example, 200 MPa, 150 MPa, 100 MPa, or 80 MPa. The fracture strength of the positive electrode active material particles can be set to any one of the above-described lower limits or more and any one of the above-described upper limits or less. The fracture strength of the positive electrode active material particles can be controlled by types of the positive electrode active material and the carbon material for coating the surface, as well as by manufacturing conditions such as a method for preparing the positive electrode active material (a hydrothermal method, a solid phase method, etc.), calcination conditions, and conditions of a method for forming the positive electrode active material particles (a spray drying method, etc.). The positive electrode active material particles having a fracture strength in the above range can be selected and used from commercially available known positive electrode active material particles by measuring the fracture strength.

A lower limit of the average particle size of the positive electrode active material particles is 3 µm, preferably 4 µm, and more preferably 5 µm. By having the average particle size of the positive electrode active material particles not less than the above lower limit, whereby the positive electrode active material particles are sufficiently embedded in the positive electrode substrate 2 by pressing or the like in the process of manufacturing the positive electrode, and thus the electrical resistance can be reduced. On the other hand, an upper limit of the average particle size of the positive electrode active material particles is preferably 30 µm, more preferably 20 µm, still more preferably 15 µm, and even more preferably 10 µm. By having the average particle size of the positive electrode active material particles not greater than the above upper limit, whereby pressability is improved, and the positive electrode active material layer 3 having a high density can be formed. Therefore, the energy density per unit volume of the positive electrode 1 and the energy storage device including the positive electrode 1 can be increased. In addition, by having the average particle size of the positive electrode active material particles not greater than the above upper limit, contact points between the positive electrode active material particles and between the positive electrode active material and the positive electrode substrate 2 are increased, and thus the electrical resistance can be further reduced. The average particle size of the positive electrode active material particles can be set to any one of the above-described lower limits or more and any one of the above-described upper limits or less. In order to obtain positive electrode active material particles having a predetermined average particle size, a pulverizer, a classifier, or the like is used. An example of a pulverization method includes a method using a mortar, a ball mill, a sand mill, a vibrating ball mill, a planetary ball mill, a jet mill, an opposed jet mill, a spiral jet mill, or a sieve. At the time of pulverization, wet pulverization in the presence of water or an organic solvent such as hexane can also be used. As a classification method, a sieve, an air classifier, or the like is used as necessary in both a dry method and a wet method.

The content of the positive electrode active material particles in the positive electrode active material layer 3 is preferably not less than 70% by mass and not greater than 99% by mass, more preferably not less than 80% by mass and not greater than 98% by mass, still more preferably not less than 85% by mass and not greater than 97% by mass, and even more preferably not less than 90% by mass and not greater than 95% by mass. By setting the content of the positive electrode active material particles within the above range, both high energy density and manufacturability of the positive electrode active material layer 3 can be achieved.

The non-aqueous binder means a binder that can be dissolved or dispersed in a non-aqueous solvent when a positive electrode mixture paste is prepared. Examples of the non-aqueous binders include polyvinylidene fluoride (PVDF), copolymers of vinylidene fluoride and hexafluoropropylene, copolymers of ethylene and vinyl alcohol, polyacrylonitrile, polyphosphazene, polysiloxane, polyvinyl acetate, polymethyl methacrylate, polystyrene, polycarbonate, polyamide, polyimide, polyamide-imide, crosslinked polymers of cellulose and chitosan pyrrolidone carboxylate, derivatives of chitin or chitosan, and the like. Examples of the non-aqueous solvent include N-methylpyrrolidone (NMP) and the like.

The content of the non-aqueous binder in the positive electrode active material layer 3 is preferably not less than 1% by mass and not greater than 10% by mass, and more preferably not less than 3% by mass and not greater than 6% by mass. By setting the content of the non-aqueous binder within the above range, the positive electrode active material particles can be stably held.

The conductive agent is not particularly limited as long as it is a material having conductivity. Examples of such a conductive agent include carbon materials, metals, conductive ceramics, and the like. Examples of the carbon materials include graphite, non-graphitic carbon, graphene-based carbon, and the like. Examples of the non-graphitic carbon include carbon nanofibers, pitch-based carbon fibers, carbon black, and the like. Examples of the carbon black include furnace black, acetylene black, ketjen black, and the like. Examples of the graphene-based carbon include graphene, a carbon nanotube (CNT), fullerene, and the like. Examples of shapes of the conductive agent include powder, fiber, and the like. As the conductive agent, one of these materials may be used alone, or two or more kinds may be used as a mixture. Further, these materials may be used in a composite form. For example, a composite material of carbon black and CNT may be used. Among these, carbon black is preferable from the viewpoint of electron conductivity and coatability, and acetylene black is particularly preferable.

A lower limit of the content of the conductive agent in the positive electrode active material layer 3 is preferably 0.5% by mass, more preferably 1% by mass, still more preferably 2% by mass, even more preferably 3% by mass, and yet more preferably 4% by mass in some cases. By having the content of the conductive agent in the positive electrode active material layer 3 not less than the above lower limit, the electrical resistance of the positive electrode 1 is further reduced. On the other hand, an upper limit of the content of the conductive agent in the positive electrode active material layer 3 is preferably 10% by mass, more preferably 9% by mass, still more preferably 8% by mass, and even more preferably 7% by mass, 6% by mass, or 5% by mass in some cases. By having the content of the conductive agent in the positive electrode active material layer 3 not greater than the above upper limit, the content of the positive electrode active material particles can be increased, and the energy density and the like of the energy storage device can be increased. The content of the conductive agent in the positive electrode active material layer 3 can be set to any one of the above-described lower limits or more and any one of the above-described upper limits or less. When the positive electrode active material layer 3 includes positive electrode active material particles at least a part of the surface of which is coated with a carbon material, the carbon material coating the positive electrode active material particles is not included in the conductive agent.

The thickener is not particularly limited, and by incorporating it into the positive electrode mixture paste containing the positive electrode active material particles and the non-aqueous binder, a thickener having a function of adjusting the viscosity of the positive electrode mixture paste to a viscosity suitable for coating can be adopted. When the thickener is used, the content of the thickener in the positive electrode active material layer 3 can be, for example, not less than 0.1% by mass and not greater than 8% by mass, and can also be not greater than 5% by mass or not greater than 1% by mass. The technique disclosed herein can be preferably implemented in an embodiment in which the positive electrode active material layer 3 does not contain a thickener.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; substances derived from mineral resources such as talc, montmorillonite, boehmite, zeolite, apatite, kaolin, mullite, spinel, olivine, sericite, bentonite, and mica, or synthetic substances thereof; and the like. In the case of using a filler, the content of the filler in the positive electrode active material layer 3 can be, for example, not less than 0.1% by mass and not greater than 8% by mass, and can also be not greater than 5% by mass or not greater than 1% by mass. The technique disclosed herein can be preferably implemented in an embodiment in which the positive electrode active material layer does not contain a filler.

The positive electrode active material layer 3 may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W, as components other than the positive electrode active material particles, the conductive agent, the non-aqueous binder, the thickener, and the filler.

A lower limit of the density of the positive electrode active material layer 3 is preferably 1.5 g/cm³, more preferably 1.6 g/cm³, still more preferably 1.7 g/cm³, and in some cases, even more preferably 1.8 g/cm³, 1.9 g/cm³, 2.0 g/cm³, or 2.1 g/cm³. By having the density of the positive electrode active material layer 3 not less than the above lower limit, the electrical resistance can be further reduced, and a discharge capacity per unit volume of the positive electrode active material layer 3 can also be increased. An upper limit of the density of the positive electrode active material layer 3 is preferably 2.6 g/cm³, and more preferably 2.5 g/cm³, 2.4 g/cm³, or 2.3 g/cm³. By having the density of the positive electrode active material layer 3 not greater than the above upper limit, the positive electrode active material layer 3 is easily impregnated with the electrolyte, and the positive electrode active material layer 3 is less likely to be cracked. The density of the positive electrode active material layer 3 can be set to any one of the above-described lower limits or more and any one of the above-described upper limits or less. The density of the positive electrode active material layer 3 can be adjusted by the average particle size of the positive electrode active material particles, a strength of pressing in the process of manufacturing the positive electrode, and the like.

A mass per unit area of one layer of the positive electrode active material layer 3 is preferably not less than 0.5 mg/100 cm² and not greater than 3.0 mg/100 cm², more preferably not less than 0.7 mg/100 cm² and not greater than 2.0 mg/100 cm². By having the mass per unit area of one layer of the positive electrode active material layer 3 within the above-described range, the discharge capacity of the energy storage device can be increased. The mass per unit area of one layer of the positive electrode active material layer 3 refers to a mass per unit area of one positive electrode active material layer 3 provided on one surface of the positive electrode substrate 2 when the positive electrode active material layers 3 are each provided on both surfaces of the positive electrode substrate 2 as in the positive electrode 1 of FIG. 1.

### <Method for Manufacturing Positive Electrode>

The positive electrode can be manufactured by, for example, applying a positive electrode mixture paste to a positive electrode substrate having a surface on which metallic aluminum is exposed, drying the paste, and laminating a positive electrode active material layer on the positive electrode substrate, followed by pressing or the like. The positive electrode mixture paste contains, for example, each component constituting the positive electrode active material layer and a dispersion medium. As a result of the pressing, at least a part of the positive electrode active material particles in the positive electrode active material layer are embedded in the positive electrode substrate, and recesses are formed in the surface of the positive electrode substrate (the surface on which the metallic aluminum is exposed). In addition, a ratio of an area of recesses in a region where the positive electrode active material layer is laminated on the surface of the positive electrode substrate can be adjusted by a type and an average thickness of the positive electrode substrate, a type, a fracture strength, and an average particle size of the positive electrode active material particles, the strength of pressing, and the like.

### [Energy Storage Device]

An energy storage device according to an embodiment of the present invention includes: an electrode body including a positive electrode, a negative electrode, and a separator; an electrolyte; and a container that houses the electrode body and the electrolyte. The electrode body is usually a laminated type in which a plurality of positive electrodes and a plurality of negative electrodes are laminated with separators interposed therebetween, or a wound type in which positive electrodes and negative electrodes are wound in a state of being laminated with separators interposed therebetween. The electrolyte is present in a state of being contained in the positive electrode, the negative electrode, and the separator. The electrolyte may be a non-aqueous electrolyte. As an example of the energy storage device, a non-aqueous electrolyte secondary battery (hereinafter, also simply referred to as a "secondary battery") in which the electrolyte is a non-aqueous electrolyte will be described.

### (Positive Electrode)

As the positive electrode provided in the energy storage device, those described above as the positive electrode (positive electrode for an energy storage device) according to an embodiment of the present invention can be used.

### <Negative Electrode>

The negative electrode includes a negative electrode substrate and a negative electrode active material layer disposed on the negative electrode substrate directly or via an intermediate layer.

The negative electrode substrate has conductivity. As the material of the negative electrode substrate, a metal such as copper, nickel, stainless steel, nickel-plated steel, or aluminum, an alloy thereof, a carbon material, or the like, is used. Among them, copper or a copper alloy is preferable. Examples of the negative electrode substrate include a foil, a vapor-deposited film, a mesh, a porous material, and the like, and a foil is preferable from the viewpoint of cost. Therefore, the negative electrode substrate is preferably a copper foil or a copper alloy foil. Examples of the copper foil include a rolled copper foil, an electrolytic copper foil, and the like.

An average thickness of the negative electrode substrate is preferably not less than 2 µm and not greater than 35 µm, more preferably not less than 3 µm and not greater than 30 µm, further preferably not less than 4 µm and not greater than 25 µm, particularly preferably not less than 5 µm and not greater than 20 µm. By setting the average thickness of the negative electrode substrate within the above range, the energy density per unit volume of the energy storage device can be increased while increasing the strength of the negative electrode substrate.

The intermediate layer is a layer disposed between the negative electrode substrate and the negative electrode active material layer. The intermediate layer contains a conductive agent such as carbon particles, thereby reducing a contact resistance between the negative electrode substrate and the negative electrode active material layer. The configuration of the intermediate layer is not particularly limited, and includes, for example, a binder and a conductive agent.

The negative electrode active material layer includes a negative electrode active material. The negative electrode active material layer contains optional components such as a conductive agent, a binder, a thickener, and a filler as necessary. The optional components such as a conductive agent and a filler can be selected from the materials exemplified for the positive electrode.

The negative electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W, as components other than the negative electrode active material, the conductive agent, the binder, the thickener, and the filler.

The negative electrode active material can be appropriately selected from known negative electrode active materials. As the negative electrode active material for a lithium-ion secondary battery, a material capable of inserting and extracting lithium ions is usually used. Examples of the negative electrode active material include metal Li; metals or metalloids such as Si and Sn; metal oxides or metalloid oxides such as Si oxide, Ti oxide, and Sn oxide; titanium-containing oxides such as Li₄Ti₅O₁₂, LiTiO₂, and TiNb₂O₇; polyphosphate compounds; silicon carbide; carbon materials such as graphite and non-graphitic carbons (easily graphitizable carbons or hardly graphitizable carbons); and the like. Among these materials, graphite and non-graphitic carbon are preferable. In the negative electrode active material layer, one of these materials may be used alone, or two or more kinds may be used as a mixture.

The "graphite" refers to a carbon material having an average interplanar spacing (d002) of not less than 0.33 nm and less than 0.34 nm in a (002) plane, as determined by an X-ray diffraction method before charge and discharge or in a discharged state. Examples of the graphite include natural graphite, synthetic graphite, and the like. Synthetic graphite is preferable from the viewpoint that a material having stable physical properties can be obtained.

The "non-graphitic carbon" refers to a carbon material having an average interplanar spacing (d002) of not less than 0.34 nm and not greater than 0.42 nm in a (002) plane, as determined by an X-ray diffraction method before charge and discharge or in a discharged state. Examples of the non-graphitic carbon include hardly graphitizable carbon, easily graphitizable carbon, and the like. Examples of the non-graphitic carbon include materials derived from a resin, petroleum pitch or materials derived from petroleum pitch, petroleum coke or materials derived from petroleum coke, materials derived from plant, materials derived from alcohol, and the like.

Here, the "discharged state" means a state in which discharge is performed so that lithium ions, which can be inserted and extracted during charge and discharge, are sufficiently extracted from the carbon material, which is a negative electrode active material. For example, in a half-cell using a negative electrode containing a carbon material as a negative electrode active material as a working electrode and metal Li as a counter electrode, the state is a state in which an open circuit voltage is not less than 0.7 V.

The "hardly graphitizable carbon" refers to a carbon material having the above d002 of not less than 0.36 nm and not greater than 0.42 nm.

The "easily graphitizable carbon" refers to a carbon material having the d002 of not less than 0.34 nm and less than 0.36 nm.

The negative electrode active material is usually in the form of particles (powder). An average particle size of the negative electrode active material can be, for example, not less than 1 nm and not greater than 100 µm. When the negative electrode active material is a carbon material, a titanium-containing oxide, or a polyphosphate compound, the average particle size thereof may be not less than 1 µm and not greater than 100 µm. When the negative electrode active material is Si, Sn, Si oxides, Sn oxides, or the like, the average particle size thereof may be not less than 1 nm and not greater than 1 µm. By setting the average particle size of the negative electrode active material to not less than the above lower limit, the negative electrode active material is easily manufactured or handled. By setting the average particle size of the negative electrode active material to not greater than the above upper limit, electron conductivity of the negative electrode active material layer is improved. In order to obtain a powder having a predetermined particle size, a pulverizer, a classifier, or the like, is used. When the negative electrode active material is a metal such as metal Li, the negative electrode active material layer may be in a foil form.

A content of the negative electrode active material in the negative electrode active material layer is preferably not less than 60% by mass and not greater than 99% by mass, more preferably not less than 90% by mass and not greater than 98% by mass. By setting the content of the negative electrode active material within the above range, both high energy density and manufacturability of the negative electrode active material layer can be achieved.

Examples of the binder in the negative electrode active material layer include thermoplastic resins such as fluororesins (polytetrafluoroethylene (PTFE), polyvinylidene fluoride (PVDF), etc.), polyethylene, polypropylene, polyacrylate, and polyimide; elastomers such as ethylene-propylene-diene rubber (EPDM), sulfonated EPDM, styrene-butadiene rubber (SBR), and fluoro-rubber; polysaccharide polymers; and the like.

When the negative electrode active material layer contains a binder, the content of the binder in the negative electrode active material layer is preferably not less than 0.1% by mass and not greater than 10% by mass, more preferably not less than 1% by mass and not greater than 6% by mass.

Examples of the thickener in the negative electrode active material layer include polysaccharide polymers such as carboxymethyl cellulose (CMC) and methyl cellulose. When the thickener has a functional group that reacts with lithium or the like, this functional group may be deactivated in advance by methylation or the like.

When the negative electrode active material layer contains the thickener, the content of the thickener in the negative electrode active material layer is preferably not less than 0.1% by mass and not greater than 10% by mass, more preferably not less than 0.5% by mass and not greater than 6% by mass. The content of the thickener in the positive electrode active material layer may be not greater than 4% by mass, or may be not greater than 2% by mass.

### <Separator>

The separator can be appropriately selected from known separators. As the separator, for example, a separator formed of only a substrate layer, a separator in which a heat-resistant layer containing heat-resistant particles and a binder is formed on one surface or both surfaces of a substrate layer, or the like, can be used. Examples of shapes of the substrate layer of the separator include a woven fabric, a nonwoven fabric, a porous resin film, and the like. Among these shapes, a porous resin film is preferable from the viewpoint of strength, and a nonwoven fabric is preferable from the viewpoint of liquid retainability of non-aqueous electrolyte. As the material of the substrate layer of the separator, for example, polyolefins such as polyethylene and polypropylene are preferable from the viewpoint of a shutdown function, and for example, polyimide, aramid, and the like, are preferable from the viewpoint of oxidative decomposition resistance. A composite material of these resins may be used as the substrate layer of the separator.

Heat-resistant particles contained in the heat-resistant layer preferably have a mass loss of not greater than 5% when heated from room temperature to 500 °C in an air atmosphere at 1 atmosphere, and more preferably have a mass loss of not greater than 5% when heated from room temperature to 800 °C. Examples of the material having a mass loss of not greater than a predetermined amount include inorganic compounds. Examples of inorganic compounds include oxides such as iron oxide, silicon oxide, aluminum oxide, titanium oxide, zirconium oxide, calcium oxide, strontium oxide, barium oxide, magnesium oxide, and aluminosilicates; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources such as talc, montmorillonite, boehmite, zeolite, apatite, kaolin, mullite, spinel, olivine, sericite, bentonite, and mica, or synthetic substances thereof; and the like. As the inorganic compound, a simple substance or a composite of these materials may be used alone, or two or more kinds may be also used as a mixture. Among these inorganic compounds, silicon oxide, aluminum oxide, or aluminosilicate is preferable from the viewpoint of safety of the energy storage device.

Porosity of the separator is preferably not greater than 80 vol% from the viewpoint of strength, and is preferably not less than 20 vol% from the viewpoint of discharge performance. Here, the "porosity" is a value based on volume, and means a value measured using a mercury porosimeter.

As the separator, a polymer gel composed of a polymer and a non-aqueous electrolyte may be used. Examples of polymers include polyacrylonitrile; polyethylene oxide; polypropylene oxide; polymethyl methacrylate; polyvinyl acetate; polyvinylpyrrolidone; polyvinylidene fluoride; and the like. The use of the polymer gel has an effect of suppressing liquid leakage. As the separator, a polymer gel may be used in combination with the above-described porous resin film, nonwoven fabric, or the like.

### <Non-Aqueous Electrolyte>

The non-aqueous electrolyte can be appropriately selected from known non-aqueous electrolytes. As the non-aqueous electrolyte, a non-aqueous electrolyte solution may be used. The non-aqueous electrolyte solution contains a non-aqueous solvent and an electrolyte salt dissolved in this non-aqueous solvent.

The non-aqueous solvent can be appropriately selected from known non-aqueous solvents. Examples of non-aqueous solvents include cyclic carbonates, chain carbonates, carboxylic acid esters, phosphoric acid esters, sulfonic acid esters, ethers, amides, nitriles, and the like. As the non-aqueous solvent, those obtained by substituting a part of hydrogen atoms contained in these compounds with halogen may also be used.

Examples of cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, 1,2-diphenylvinylene carbonate, and the like. Among these, EC is preferable.

Examples of chain carbonates include diethyl carbonate (DEC), dimethyl carbonate (DMC), ethyl methyl carbonate (EMC), diphenyl carbonate, trifluoroethyl methyl carbonate, bis(trifluoroethyl) carbonate, and the like. Among these, DEC and EMC are preferable.

As the non-aqueous solvent, it is preferable to use a cyclic carbonate or a chain carbonate, and it is more preferable to use a cyclic carbonate and a chain carbonate in combination. By using the cyclic carbonate, dissociation of the electrolyte salt can be promoted to improve ionic conductivity of the non-aqueous electrolyte solution. By using the chain carbonate, viscosity of the non-aqueous electrolyte solution can be suppressed to be low. When a cyclic carbonate and a chain carbonate are used in combination, a volume ratio of the cyclic carbonate to the chain carbonate (cyclic carbonate: chain carbonate) is preferably, for example, in a range of 5:95 to 50:50.

The electrolyte salt can be appropriately selected from known electrolyte salts. Examples of electrolyte salts include lithium salts, sodium salts, potassium salts, magnesium salts, onium salts, and the like. Among these, lithium salts are preferable.

Examples of lithium salts include inorganic lithium salts such as LiPF₆, LiPO₂F₂, LiBF₄, LiClO₄, and LiN(SO₂F)₂; lithium oxalate salts such as lithium bis(oxalate) borate (LiBOB), lithium difluorooxalate borate (LiFOB), and lithium bis(oxalate) difluorophosphate (LiFOP); lithium salts having halogenated hydrocarbon groups such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃; and the like. Among these, inorganic lithium salts are preferable, and LiPF₆ is more preferable.

The content of the electrolyte salts in the non-aqueous electrolyte solution is preferably not less than 0.1 mol/dm³ and not greater than 2.5 mol/dm³, more preferably not less than 0.3 mol/dm³ and not greater than 2.0 mol/dm³, still more preferably not less than 0.5 mol/dm³ and not greater than 1.7 mol/dm³, and particularly preferably not less than 0.7 mol/dm³ and not greater than 1.5 mol/dm³, at 20 °C and 1 atmosphere. By setting the content of the electrolyte salt within the above range, the ionic conductivity of the non-aqueous electrolyte solution can be increased.

The non-aqueous electrolyte solution may contain an additive in addition to the non-aqueous solvent and the electrolyte salt. Examples of additives include halogenated carbonate esters such as fluoroethylene carbonate (FEC) and difluoroethylene carbonate (DFEC); unsaturated cyclic carbonate esters such as vinylene carbonate (VC), methyl vinylene carbonate, and ethyl vinylene carbonate; oxalate salts such as lithium bis(oxalate) borate (LiBOB), lithium difluorooxalate borate (LiFOB), and lithium bis(oxalate) difluorophosphate (LiFOP); imide salts such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, tetrakis(trimethylsilyl)titanate, lithium monofluorophosphate, lithium difluorophosphate; and the like. One kind of these additives may be used alone, or two or more kinds may be used as a mixture.

The content of the additives contained in the non-aqueous electrolyte solution is preferably not less than 0.01% by mass and not greater than 10% by mass, more preferably not less than 0.1% by mass and not greater than 7% by mass, still more preferably not less than 0.2% by mass and not greater than 5% by mass, and particularly preferably not less than 0.3% by mass and not greater than 3% by mass, with respect to the entire mass of the non-aqueous electrolyte solution. By setting the content of the additives within the above range, capacity retention performance or cycle performance after high-temperature storage can be improved, and the safety can be further improved.

As the non-aqueous electrolyte, a solid electrolyte may be used, or a non-aqueous electrolyte solution and a solid electrolyte may be used in combination.

The solid electrolyte can be selected from any material having ionic conductivity and being solid at room temperature (for example, 15 °C to 25 °C), such as lithium, sodium, and calcium. Examples of the solid electrolyte include a sulfide solid electrolyte, an oxide solid electrolyte, a nitride solid electrolyte, a polymer solid electrolyte, and the like.

In the case of a lithium-ion secondary battery, examples of sulfide solid electrolytes include Li₂S-P₂S₅, LiI-Li₂S-P₂S₅, Li₁₀Ge-P₂S₁₂, and the like.

The shape of the energy storage device of the present embodiment is not particularly limited, and examples thereof include a cylindrical battery, a prismatic battery, a flat battery, a coin battery, a button battery, and the like.

FIG. 2 illustrates an energy storage device 10 as an example of a prismatic battery. Note that FIG. 2 is a perspective view of the inside of the container. An electrode body 11 having a positive electrode and a negative electrode wound with a separator interposed therebetween is housed in a prismatic container 12. The positive electrode is electrically connected to a positive electrode terminal 13 via a positive electrode lead 14. The negative electrode is electrically connected to a negative electrode terminal 15 via a negative electrode lead 16.

### <Energy Storage Apparatus>

The energy storage device of the present embodiment can be mounted as an energy storage unit (battery module) composed of a plurality of energy storage devices assembled together, in a power source for an automobile such as an electric vehicle (EV), a hybrid electric vehicle (HEV), or a plug-in hybrid electric vehicle (PHEV), a power source for an electronic device such as a personal computer or a communication terminal, a power source for power storage, or the like. In this case, the technique according to the present invention may be applied to at least one energy storage device included in the energy storage unit.

An energy storage apparatus according to an embodiment of the present invention includes two or more energy storage devices, and includes one or more of the energy storage devices according to an embodiment of the present invention described above (hereinafter, referred to as "second embodiment"). The technique according to an embodiment of the present invention may be applied to at least one energy storage device included in the energy storage apparatus according to the second embodiment. The energy storage apparatus may include one energy storage device according to an embodiment of the present invention and one or more energy storage devices that are not according to an embodiment of the present invention, or may include two or more energy storage devices according to an embodiment of the present invention.

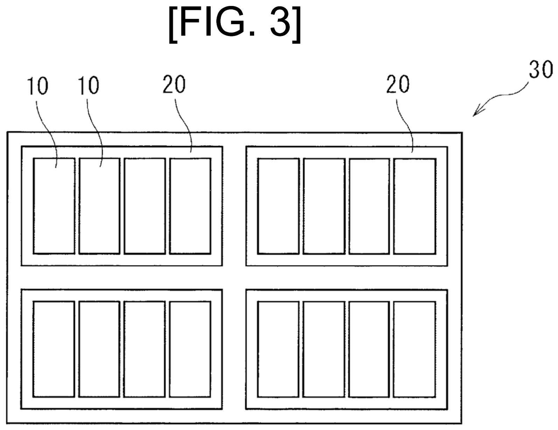

FIG. 3 illustrates an example of an energy storage apparatus 30 according to the second embodiment in which energy storage units 20, each including two or more electrically connected energy storage devices 10 assembled together, are further assembled. The energy storage apparatus 30 may include a bus bar (not illustrated) that electrically connects two or more energy storage devices 10, a bus bar (not illustrated) that electrically connects two or more energy storage units 20, and the like. The energy storage unit 20 or the energy storage apparatus 30 may include a state monitoring device (not illustrated) that monitors the state of one or more of the energy storage devices 10.

### <Method for Manufacturing Energy Storage Device>

The method for manufacturing the energy storage device according to the present embodiment can be appropriately selected from known methods. The manufacturing method includes, for example, preparing an electrode body, preparing an electrolyte, and housing the electrode body and the electrolyte in a container. Preparing the electrode body includes preparing a positive electrode and a negative electrode, and forming the electrode body by stacking or winding the positive electrode and the negative electrode with a separator interposed therebetween.

Housing the electrolyte in the container can be appropriately selected from known methods. For example, when a non-aqueous electrolyte solution is used as the electrolyte, the non-aqueous electrolyte solution may be injected through an inlet formed in the container, and then the inlet may be sealed.

### <Other Embodiments>

The positive electrode for an energy storage device, the energy storage device, the energy storage apparatus according to the present invention are not limited to the above-described embodiments, and various modifications may be made without departing from the scope of the present invention. A configuration of another embodiment can be added to the configuration of one embodiment, or a part of the configuration of one embodiment can be replaced with the configuration of another embodiment or with well-known technology. Further, a part of the configuration of one embodiment can be deleted. Well-known technology can also be added to the configuration of one embodiment.

In the above embodiment, the case where the energy storage device is used as a chargeable and dischargeable non-aqueous electrolyte secondary battery (for example, a lithium-ion secondary battery) has been described. However, the type, shape, size, capacity, and the like of the energy storage device are arbitrary. The present invention is also applicable to various secondary batteries and capacitors such as electric double-layer capacitors and lithium-ion capacitors. The energy storage device according to the present invention may be an energy storage device other than the non-aqueous electrolyte energy storage device.

In the above embodiment, the electrode body in which the positive electrode and the negative electrode are stacked with the separator interposed therebetween has been described, but the electrode body may not include the separator. For example, the positive electrode and the negative electrode may be in direct contact with each other in a state where a non-conductive layer is formed on the active material layer of the positive electrode or the negative electrode.

Although the positive electrode in which the positive electrode active material layer is laminated on both surfaces of the positive electrode substrate has been described in the above embodiment, the positive electrode active material layer may be laminated on only one surface of the positive electrode substrate. Further, the positive electrode substrate may have a shape other than a plate shape.

Hereinafter, the present invention will be described in more detail with reference to embodiment examples. The present invention is not limited to the following embodiment examples.

### [Embodiment Example 1]

### (Preparation of Positive Electrode)

As the positive electrode active material particles, secondary particles LiFePO₄ having a fracture strength of 55.4 MPa and an average particle size of 5.1 µm were prepared. The positive electrode active material particles used in embodiment examples and comparative examples were all selected from commonly produced materials for use. Further, as a positive electrode substrate, an aluminum foil which was not subjected to a roughening treatment was prepared. Since the positive electrode substrate was an aluminum foil, the entire surface was a surface on which metallic aluminum was exposed.

A positive electrode mixture paste was prepared using the positive electrode active material particles, acetylene black (AB), which is a conductive agent, polyvinylidene fluoride (PVDF), which is a non-aqueous binder, and N-methylpyrrolidone (NMP), which is a non-aqueous solvent as a dispersion medium. A mass ratio of the positive electrode active material particles, AB, and PVDF was 90.0:5.0:5.0 in terms of solid content. The positive electrode mixture paste was applied to both surfaces of the above aluminum foil, which is the positive electrode substrate, leaving one end region uncoated. Thereafter, the resultant was dried and roll-pressed to form a positive electrode active material layer, thereby obtaining a positive electrode of Embodiment Example 1. The coating amount of the positive electrode mixture paste was 1.0 mg/100 cm² in terms of solid content. That is, the mass per unit area of one layer of the positive electrode active material layer in the obtained positive electrode of Embodiment Example 1 was set to 1.0 mg/100 cm².

In the obtained positive electrode of Embodiment Example 1, as measured by the above-described method, density of the positive electrode active material layer was 2.16 g/cm³; a ratio of an area of recesses in a region where the positive electrode active material layer was laminated on the surface of the positive electrode substrate (the surface on which metallic aluminum was exposed) was 21.6%; and a ratio of an area of recesses in a region where the positive electrode active material layer was not laminated was not greater than 0.1%. In the positive electrodes of other embodiment examples and comparative examples, the ratio of the area of the recesses in the region where the positive electrode active material layer was not laminated was not greater than 0.1%.

### (Preparation of Negative Electrode)

Graphite (synthetic graphite and natural graphite) (Gr), which is a negative electrode active material, styrene-butadiene rubber (SBR), which is a binder, carboxymethyl cellulose (CMC), which is a thickener, and water, which is a dispersion medium, were mixed to prepare a negative electrode mixture paste. A mass ratio of graphite, SBR, and CMC was 96.7:2.1:1.2 in terms of solid content. The negative electrode mixture paste was applied to both surfaces of a copper foil, which is a negative electrode substrate, and then dried and roll-pressed to form a negative electrode active material layer, thereby obtaining a negative electrode.

### <Non-Aqueous Electrolyte>

A solution was prepared by dissolving LiPF₆ at a concentration of 0.9 mol/dm³ in a solvent prepared by mixing ethylene carbonate (EC), diethyl carbonate (DEC), and ethyl methyl carbonate (EMC) at a volume ratio of 30:35:35, and adding 0.3% by mass of vinylene carbonate (VC) as an additive. The above solution was obtained as a non-aqueous electrolyte.

### <Separator>

A polyethylene microporous film was used as the separator.

### (Assembly of Energy Storage Devices)

The positive electrode, the negative electrode, and the separator were stacked to prepare an electrode body. The obtained electrode body was placed in a container, and then the above non-aqueous electrolyte was injected into the container, after which the container was sealed.

The assembled energy storage device was subjected to constant-current charging at a charging current of 0.2 C to 3.5 V under a temperature environment of 25 °C, and then subjected to constant-voltage charging at 3.5 V. The condition for terminating charging was that the charging current reached 0.01 C. After a rest period of 10 minutes, constant-current discharge was performed at a discharge current of 0.2 C to 2.0 V. The energy storage device of Embodiment Example 1 was obtained through the above initial charge and discharge.

### [Embodiment Examples 2 to 18 and Comparative Examples 1 to 5]

Positive electrodes and energy storage devices of Embodiment Examples 2 to 18 and Comparative Examples 1 to 5 were obtained in the same manner as in Embodiment Example 1, except that the positive electrode active material particles (secondary particles of LiFePO₄) each having a fracture strength and an average particle size illustrated in Table 1 were used, a mass ratio of the positive electrode active material particles, AB, and PVDF, and a mass per unit area of one layer of the positive electrode active material layer were as illustrated in Table 1, and the linear pressure of roll press on the positive electrode active material layer was appropriately changed (including those not subjected to roll press). The fracture strength of the positive electrode active material particles used in Comparative Example 5 could not be measured.

Table 1 illustrates, for each of the obtained positive electrodes, the density of the positive electrode active material layer and the ratio of the area of recesses in the region where the positive electrode active material layer was laminated on the surface of the positive electrode substrate (the surface on which metallic aluminum is exposed), which were both measured by the above-described method.

### [Comparative Example 6]

A positive electrode of Comparative Example 6 was obtained in the same manner as in Embodiment Example 14, except that styrene-butadiene rubber (SBR), which is an aqueous binder, was used as the binder, carboxymethyl cellulose (CMC) was used as the thickener, water was used as the dispersion medium, and a mass ratio of the positive electrode active material particles, AB, SBR, and CMC were as illustrated in Table 2 in terms of solid content.

### [Evaluation]

### (Measurement of AC Resistance)

For each of the energy storage devices of the embodiment examples and comparative examples, an initial alternating-current resistance (ACR) at 1kHz was obtained under an environment of 25̊C. Measurement results are illustrated in Table 1.

**[Table 1]**

| | Positive Electrode Active Material Particles | | Positive Electrode Active Material Layer | | | Positive Electrode Substrate | ACR/Ω |
|---|---|---|---|---|---|---|---|
| | Fracture Strength MPa | Average Particle Size /µm | Positive Electrode Active Material Particles : AB : PVDF (Mass Ratio) | Mass Per Unit Area /mg·100cm⁻² | Density / g·cm⁻³ | Ratio of Area of Recesses 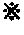 /% | |
| Embodiment Example 1 | 55.4 | 5.1 | 90.0 : 5.0 : 5.0 | 1.0 | 2.16 | 21.6 | 0.40 |
| Embodiment Example 2 | 57.9 | 9.9 | 90.0 : 5.0 : 5.0 | 1.0 | 2.16 | 13.3 | 0.47 |
| Comparative Example 1 | 8.5 | 39.3 | 90.0 : 5.0 : 5.0 | 1.0 | 2.16 | 0.0 | 3.00 |
| Comparative Example 2 | 26 | 62 | 90.0 : 5.0 : 5.0 | 10 | 2.16 | 00 | 3 89 |
| Comparative Example 3 | 55.4 | 5.1 | 90.0 : 5.0 : 5.0 | 1.0 | 1.43 | 0.0 | 1.59 |
| Embodiment Example 3 | 55.4 | 5.1 | 90.0 : 5.0 : 5.0 | 1.0 | 1.66 | 16.1 | 0.71 |
| Embodiment Example 4 | 55.4 | 5.1 | 90.0 : 5.0 : 5.0 | 1.0 | 2.09 | 21.6 | 0.40 |
| Embodiment Example 5 | 55.4 | 5.1 | 90.0 : 5.0 : 5.0 | 1.0 | 2.32 | 18.4 | 0.39 |
| Embodiment Example 6 | 55.4 | 5.1 | 90.0 : 5.0 : 5.0 | 1.0 | 2.39 | 11.1 | 0.39 |
| Comparative Example 4 | 55.4 | 5.1 | 93.0 . 3.0 :4.0 | 1.0 | 1.43 | 0.0 | 2.59 |
| Embodiment Example 7 | 55.4 | 5.1 | 93.0 : 3.0 : 4.0 | 1.0 | 1.52 | 12.9 | 0.61 |
| Embodiment Example 8 | 55.4 | 5.1 | 93.0 : 3.0 : 4.0 | 1.0 | 1.93 | 24.5 | 0.45 |
| Embodiment Example 9 | 55.4 | 5.1 | 93.0 : 3.0 : 4.0 | 1.0 | 2.19 | 32.1 | 0.41 |
| Embodiment Example 10 | 55.4 | 5.1 | 93.0 : 3.0 : 4.0 | 1.0 | 2.26 | 30.0 | 0.40 |
| Embodiment Example 11 | 55.4 | 5.1 | 94.0 : 2.0 :4.0 | 1.0 | 1.95 | 21.5 | 0.48 |
| Embodiment Example 12 | 55.4 | 5.1 | 94.0 : 2.0 :4.0 | 1.0 | 2.14 | 21.2 | 0.42 |
| Embodiment Example 13 | 55.4 | 5.1 | 94.0 : 3.0 :4.0 | 1.0 | 2.28 | 35.5 | 0.41 |
| Embodiment Example 14 | 55.4 | 5.1 | 93.0 : 3.0 : 4.0 | 1.8 | 1.85 | 7.4 | 0.66 |
| Embodiment Example 15 | 55.4 | 5.1 | 93.0 : 3.0 :4.0 | 1.8 | 1.92 | 6.7 | 0.57 |
| Embodiment Example 16 | 55.4 | 5.1 | 93.0 : 3.0 : 4.0 | 1.8 | 2.03 | 11.2 | 0.50 |
| Embodiment Example 17 | 55.4 | 5.1 | 93.0 : 3.0 : 4.0 | 1.8 | 2.14 | 23.4 | 0.44 |
| Embodiment Example 18 | 55.4 | 5.1 | 96.0 : 1.0 : 3.0 | 1.8 | 2.14 | 17.7 | 0.54 |
| Comparative Example 5 | Not Measurable | 1.4 | 93.0 : 3.0 : 4.0 | 1.8 | 2.14 | 1.4 | 1.23 |

Note: 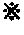 A ratio of an area of recesses in a region where the positive electrode active material layer is laminated on a surface (on which metallic aluminum is exposed).

**[Table 2]**

| | Positive Electrode Active Material Particles | | Positive Electrode Active Material Layer | | | Positive Electrode Substrate | ACR/Ω |
|---|---|---|---|---|---|---|---|
| | Fracture Strength /MPa | Average Particle Size /µm | Positive Electrode Active Material Particles : AB : SBR : CMC (Mass Ratio) | Mass Per Unit Area /mg·100cm⁻² | Density /g·cm⁻³ | Ratio of Area of Recesses 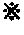 /% | |
| Comparative Example 6 | 55.4 | 5.1 | 93.0:3.0:3.0:1.0 | 1.8 | 1.85 | Not Measured | Not Measurable |

| | | | | | | | |
|---|---|---|---|---|---|---|---|
| Note: 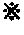 A ratio of an **area** of recesses in a region where the positive electrode active matenal layer is laminated on a surface (on which metallic aluminum is exposed). | | | | | | | |

As illustrated in Table 1, each of the ebnergy storage devices of Embodiments Examples 1 to 18, in which the positive electrode active material particles having a fracture strength of not less than 30 MPa and an average particle size of not less than 3 µm were used, the positive electrode active material layer contains PVDF, which is a non-aqueous binder, and the ratio of the area of recesses in the region where the positive electrode active material layer was laminated on the surface of the positive electrode substrate (the surface on which metallic aluminum was exposed) is not less than 5%, had an ACR of not greater than 1.0 Ω and exhibited a reduced electrical resistance. On the other hand, the energy storage devices of Comparative Examples 1, 2, and 5, which used the positive electrode active material particles having a fracture strength of not less than 30 MPa and an average particle size of not more than 3 µm, and the energy storage devices of Comparative Examples 3 and 4, which used the positive electrode active material particles having a fracture strength of not less than 30 MPa and not less than an average particle size of 3 µm, but in which the ratio of the area of recesses in the region where the positive electrode active material layer was laminated on the surface of the positive electrode substrate is less than 5%, had an ACR exceeding 1.0 Ω and exhibited high electrical resistance.

As illustrated in Table 2, in Comparative Example 6 in which SBR, which is an aqueous binder, was used as the binder, the positive electrode was fractured in the process of assembling the energy storage device, and the energy storage device could not be produced; therefore, the ACR could not be measured. This is considered to be because the aqueous binder was harder than the non-aqueous binder, and a degree to which the positive electrode active material particles were embedded in the positive electrode substrate became too large, resulting in a decrease in the strength of the positive electrode substrate.

### INDUSTRIAL APPLICABILITY

The present invention is suitably used as an energy storage device or the like including a non-aqueous electrolyte secondary battery used as a power source of an electronic device such as a personal computer or a communication terminal, an automobile, or the like.

### DESCRIPTION OF REFERENCE NUMERALS

1 Positive electrode
2 Positive electrode substrate
3 Positive electrode active material layer
4 Region where positive electrode active material layer is laminated
5 Region where positive electrode active material layer is not laminated
6 Recess
10 Energy storage device
11 Electrode body
12 Container
13 Positive electrode terminal
14 Positive electrode lead
15 Negative electrode terminal
16 Negative electrode lead
20 Energy storage unit
30 Energy storage apparatus

## Claims

1. A positive electrode for an energy storage device, comprising:
a positive electrode substrate containing metallic aluminum and having a surface on which the metallic aluminum is exposed; and
a positive electrode active material layer directly laminated on the surface on which the metallic aluminum is exposed and containing positive electrode active material particles, wherein
the positive electrode active material particles have a fracture strength of not less than 30 MPa,
the positive electrode active material particles have an average particle size of not less than 3 µm,
the positive electrode active material layer contains a non-aqueous binder, and
a ratio of an area of recesses in a region where the positive electrode active material layer is laminated on the surface on which the metallic aluminum is exposed is not less than 5%.

2. The positive electrode for an energy storage device according to claim 1, wherein
a region where the positive electrode active material layer is not laminated exists on the surface on which the metallic aluminum is exposed, and
a ratio of an area of recesses in the region where the positive electrode active material layer is not laminated is not greater than 0.5%.

3. The positive electrode for an energy storage device according to claim 1 or 2, wherein the positive electrode active material particles contain a lithium transition metal compound having a polyanion structure.

4. The positive electrode for an energy storage device according to claim 1 or 2, wherein the positive electrode active material layer has a density of not less than 1.5 g/cm³.

5. The positive electrode for an energy storage device according to claim 1 or 2, wherein
the positive electrode active material layer further includes a conductive agent, and
a content of the conductive agent in the positive electrode active material layer is not less than 0.5% by mass.

6. An energy storage device, comprising the positive electrode for an energy storage device according to claim 1 or 2.

7. An energy storage apparatus, comprising two or more energy storage devices, and comprising one or more of the energy storage devices according to claim 6.
